## Europäisches Patentamt

**European Patent Office**

**Office européen des brevets**

(11) Publication number: **0 051 903**
**B1**

(12) **EUROPEAN PATENT SPECIFICATION**

(45) Date of publication of patent specification: **12.09.84**

(21) Application number: **81300295.3**

(22) Date of filing: **22.01.81**

(51) Int. Cl.³: **G 05 F 1/70, H 02 P 7/62**

(54) **Three phase power factor controller.**

(30) Priority: **23.10.80 US 199765**

(43) Date of publication of application:
**19.05.82 Bulletin 82/20**

(45) Publication of the grant of the patent:
**12.09.84 Bulletin 84/37**

(84) Designated Contracting States:
**AT BE CH DE FR GB IT LI LU NL SE**

(56) References cited:
**US-A-4 052 648**
**US-A-4 176 307**
**US-A-4 207 510**

**ELEKTROTECHNISCHE ZEITSCHRIFT, Ausgabe A, vol. 100, no. 24, November 1979 Berlin, DE N. GABEL "Wie man Blindleistung reduziert", pages 1397-1398**

(73) Proprietor: **NATIONAL AERONAUTICS AND SPACE ADMINISTRATION**
**NASA Headquarters**
**Washington, D.C. 20546 (US)**

(72) Inventor: **Nola, Frank Joseph**
**117 Westbury Drive, SW**
**Huntsville Alabama 35802 (US)**

(74) Representative: **Barnard, Eric Edward et al**
**BROOKES & MARTIN High Holborn House 52/54 High Holborn**
**London WC1V 6SE (GB)**

Courier Press, Leamington Spa, England.

## Description

### Technical field

This invention relates to an improved control for regulating power input to a three phase A.C. induction motor as a function of load.

### Background art

The applicant previously described in United States Patent 4,052,648 a power reduction system for induction motors in which the effective voltage input to the motor is varied directly as a function of load. In that patent it is noted that the power factor of such motors varies directly with loading, and that the power factor of a less than fully loaded motor might be maintained at an optimum level by reducing the effective voltage to the motor. As described in the referenced patent, the power input to a motor may be automatically varied as a function of load by commanding that it operate at a selected power factor. This system has been very successful in significantly reducing power consumption, particularly with intermittently loaded motors and/or where the line voltage fluctuates, and has been widely used with respect to single phase motors.

The applicant also tested the applicability of this system to three phase motors wherein the "Y" or common reference power terminal of the motor is brought out of the motor and available for control purposes. It worked well, see "etz 100 (Nov. 1979) page 1397. In many three phase motors, such as a delta wound motor, however, it has been found that a common reference terminal is not available, that is, a terminal through which current from all three phases flows. It further appears that simply sampling one of the three phases of the motor and deriving a power factor control signal from it is not satisfactory, as significant stability problems are encountered.

### Summary of the invention

It is an object of this invention to provide an improved power factor controller particularly adaptable to three phase motors wherein no terminal common to all phases is available and wherein problems of motor instability are overcome.

In accordance with this invention a power factor or phase detector is employed for each of the phases of a three phase induction motor, the detected values are summed to effect a composite signal, and this signal is used as a basis of control. The composite signal is subjected to conditioning, including signal integration, and employed to control the turn-on time of each of three thyristors coupling power to the motor.

### Brief description of the drawings

Fig. 1 is an electrical schematic diagram of an embodiment of the invention.

Fig. 2 is an electrical schematic diagram of the phase detectors employed in the embodiment shown in Fig. 1.

Fig. 3 shows a series of wave forms illustrative of the operation of the phase detector shown in Fig. 2.

Fig. 4 shows a series of waveforms illustrating the generation of triggering pulses in accordance with the circuitry shown in Fig. 1.

Fig. 5 is an electrical schematic diagram of an alternate embodiment of the invention.

Fig. 6 is an electrical schematic diagram of the phase detector employed in the embodiment shown in Fig. 5.

Fig. 7 shows a series of signal pulses illustrating the frequency of turn-on of the Triac-type thyristors employed in the circuit shown in Fig. 5.

### Detailed description of the preferred embodiment

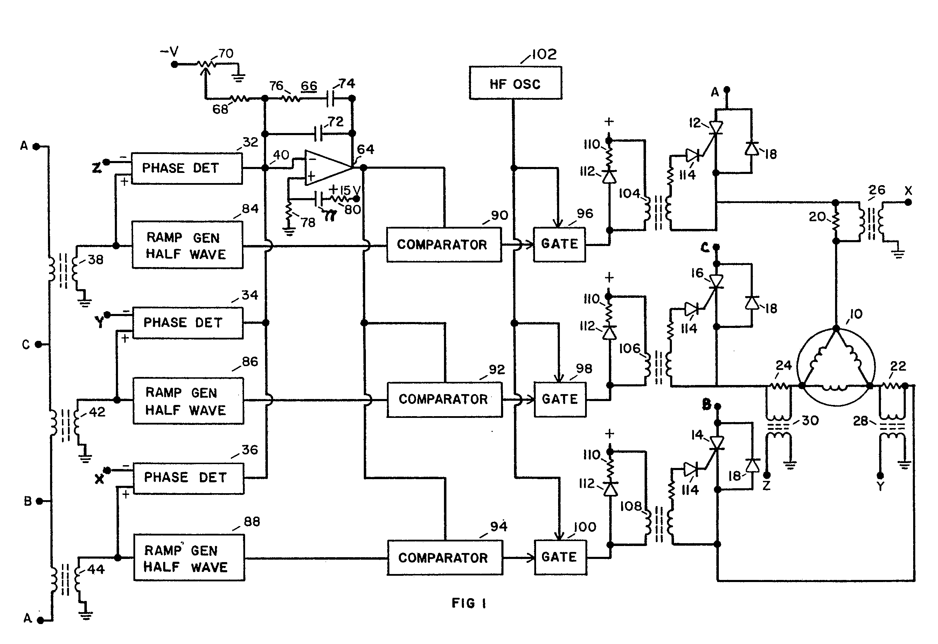

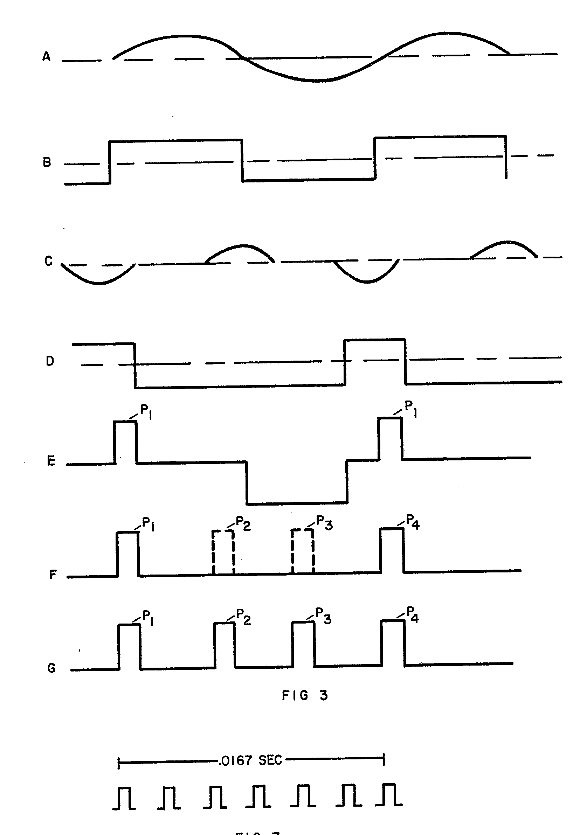

Referring initially to Fig. 1, a three phase induction motor 10 is powered through thyristor or SCR (silicon control rectifier) devices 12, 14, and 16 from a three phase power line, typically providing 220 or 440 volts, 60 cycle, alternating current to terminals A, B, and C. One phase of such a signal is illustrated by voltage waveform a of Fig. 3. As the SCR devices provide for conduction only in one direction, a diode 18 is connected across each SCR and poled for opposite direction conduction. Current is sampled by current sampling transformers 26, 28, and 30, shunted by resistors 20, 22, and 24, each of these resistors being connected in series with an input to motor 10. Transformers 26, 28, and 30 are individually connected across one of these resistors (via a primary winding, as shown), and with one secondary terminal grounded, the other secondary terminal provides a discretely phased current signal output (as shown in waveform c of Fig. 3). Terminal X is associated with phase A, terminal Z is associated with phase C, and terminal Y is associated with phase B. A power factor signal inversely proportional to the current-voltage phase differential of each of the three phase inputs is obtained, separately, by phase detectors 32, 34, and 36. Phase detector 32 receives a current responsive signal sample from terminal Z representative of the C phase current, and a voltage signal from transformer 38 representative of the A-C phase voltage, and provides a first phase detected output at terminal 40. Phase detector 34 receives a sample from terminal Y representative of the B phase current and a C-B phase voltage sample from transformer 42, and provides a second phase detected output at terminal 40. Phase detector 36 receives a phase A current signal sample from terminal X and a B-A phase voltage sample from transformer 44, and provides a third phase detection signal at terminal 40. The three signals, designated $P_1$, $P_2$, and $P_3$, respectively, from the three phase detectors are shown in waveform f and g of Fig. 3.

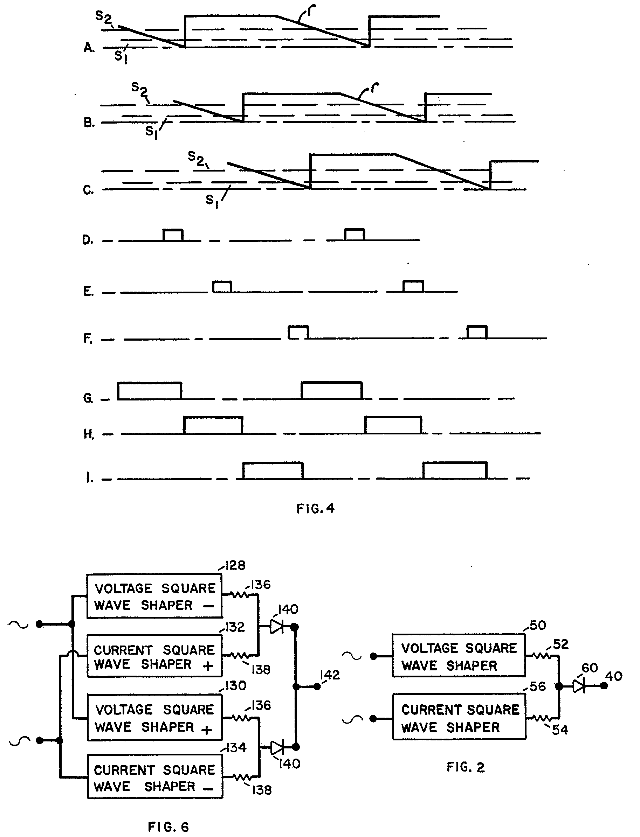

The phase detectors are identical; one is shown in Fig. 2. It includes two conventional squaring circuits. One is voltage square wave shaper 50, which provides through resistor 52 a rectangular wave (waveform b of Fig. 3) responsive to the input voltage (waveform a of Fig. 3). The second one is current square wave shaper 56, which provides through resistor 54 a rectangular wave (waveform d of Fig. 3) representative of the negative half cycle of input current (waveform c of Fig. 3). The outputs of the two wave shaping circuits are combined through resistors 52 and 54. Diode 60 passes only the positive portion of each output to terminal 40, which is common to the outputs of all three phase detectors. Waveform e illustrates the combination process showing the waveform of a single phase detector as it would appear without diode 60, which diode eliminates the negative portions of the waveforms. Significantly, in the detection process, each phase detector produces a pulse (e.g., $P_1$ from detector 32, $P_2$ from detector 34, and $P_3$ from detector 36) which is, in effect, turned "on" by the leading or rising edge of voltage waveform b and turned "off" by the trailing edge of waveform d. Thus, the width of pulse $P_1$ (it has a constant amplitude) tends to increase with an increase phase angle between current and voltage (thus decreased power factor) and decrease in width with decreased phase angle (and thus increased power factor).

Assuming as indicated that pulse $P_1$ represents the output of phase detector 32, waveforms f and g illustrate the relative time presence of output pulses $P_2$ and $P_3$ from phase detectors 34 and 36, respectively. As the outputs are brought together at terminal 40, waveform g of Fig. 3 illustrates the combined signals at this point. This composite becomes the basic feedback control signal, and as will be noted, this is a signal of pulses of a repetition rate of 180 Hz. This is in contrast to previous circuit approaches wherein a single phase detected output (from one of the three phases) is employed, which would, of course, have been either at 60 Hz or 120 Hz rate, depending upon whether a half or full wave detection was employed.

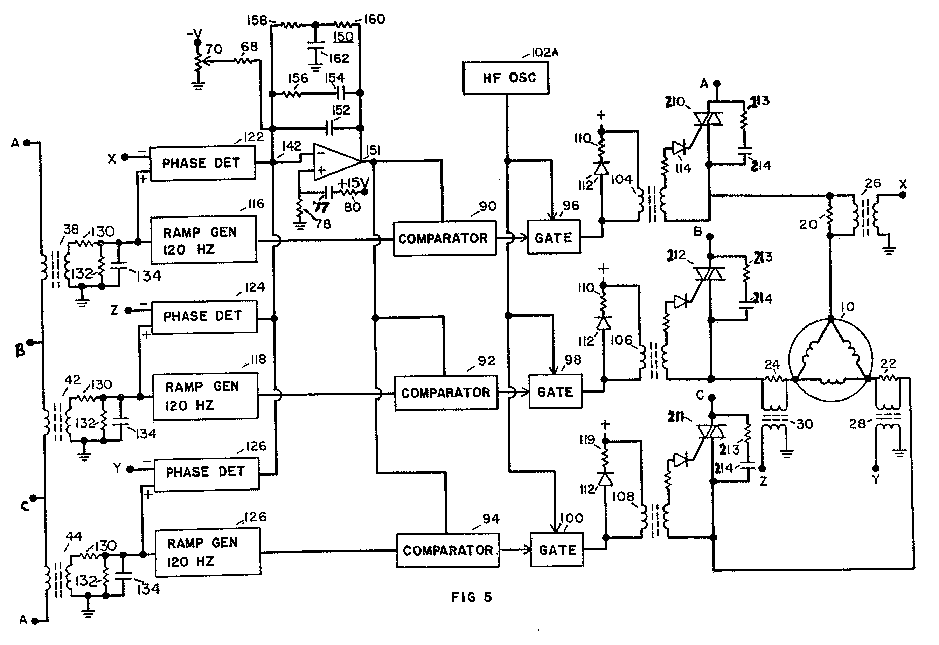

The next step in accordance with this invention is to effect a conditioning of the control signal wherein its direct current characteristic must be compatible with the SCR trigger circuitry and still have a frequency response up to on the order of 20 Hz. The control signal is applied to the inverting input of operational amplifier 64 of signal conditioner or integrating circuit 66, together with a power factor command signal supplied through resistor 68 from potentiometer 70. Potentiometer 70 is biased negatively to provide a difference or subtraction signal with respect to the positive signal as developed at the outputs of the phase detectors. Signal conditioning is effected by an inverse feedback network consisting of two circuits, one being capacitor 72 connected between the output and inverting input of operational amplifier 64, and the other consisting of a series combination of capacitor 74 and resistor 76 connected between these two points. The feedback network is basically an integrative or lag one. The combination of resistor 76 (approximately 15,000 ohms) and capacitor 74 (approximately 5 MFD) is initially effective (at 0 frequency) to commence providing a lag effect. At about 2 Hz, the lag state commences to diminish as the value of resistor 76 commences to have a dominant effect over capacitor 74. Then at about 20 Hz, capacitor 72 (approximately .68 MFD) commences to be effective to again impose a pronounced lag effect. The resulting signal is a relatively smooth signal representing the integral of the composite outputs of the phase detectors less the command signal. The signal, as used, is represented by the sample signal waveforms $S_1$ and $S_2$ as shown in Fig. 4. It is important that while the signals have a relatively smooth and constant level, approximating the average signal value present, the signal must be responsive to signal changes incident to changes in motor loading, typically calling for a signal response upward to approximately 20 Hz. This is achieved by the circuitry shown.

Inasmuch as the control system of the invention has the effect of providing a quite low RMS voltage to motor 10 in its normal running but unloaded state, and such voltage would be inadequate to provide a starting voltage to the motors, means are provided to insure that the load or power factor control signal is ineffective until the motor is brought up to operating speed. This is accomplished by a delay circuit consisting of capacitor 77 connected to the positive, or non-inverting, input of operational amplifier 64, a resistor 78 connected between this input and ground, and resistor 80 in series with capacitor 77 and a +15 volt power supply (as shown). Upon the application of power to motor 10, and at the same time to the bias supply (not shown) providing all bias voltages for the circuitry in Fig. 1, an initial charging current through resistors 78 and 80 is of a value sufficient to override a maximum input applied to the negative input of amplifier 64 for a period of several seconds. Thus, motor 10 is brought up to operating speed before its input voltage may be effectively reduced in accordance with the control mode as described.

SCR triggering signals are developed by the comparison of the control signal (e.g., $S_1$ and $S_2$ of Fig. 4) output of operational amplifier 64 and ramp shaped signals r. A ramp signal for each phase is developed by one of conventional ramp generators 84, 86, and 88, responsive to A-C, C-B, and B-A phase voltages from transformers 38, 42, and 44, respectively. The ramp outputs r of these generators are illustrated by solid line in waveforms a, b, and c, respectively, of Fig. 4, and are separately applied to conventional comparators 90, 92, and 94, together with a control signal from operational amplifier 64. In operation, a comparator provides a pulse output when the level of the control signal, e.g., dashed line $S_1$ of Fig. 4, intersects the leading edge of a ramp signal. Thus, with a control signal $S_1$ applied to the comparators, output pulses are produced shown in waveforms d, e, and f of Fig. 4. These pulses, which result in the triggering of the thyristors, occur once per cycle, and are thus representative of a half wave mode of operation. The relatively narrow triggering pulses shown as waveforms d, e, and f produce relatively short "turn on" times for SCR devices 12, 14, and 16, and thus produce a relatively low RMS input voltage to motor 10. This state of operation will initially have been brought about by phase detectors detecting a downward shift in power factor (by an upward shift in current-voltage phase angle) occurring when motor loading is reduced. The resulting output signal of operational amplifier 64 will produce a motor RMS input voltage which brings about an equilibrium between the command power factors determined by the bias output of potentiometer 70 and the integrated output of the phase detectors.

The actual control of the current "turn on" periods for the SCR's is effected by gates 96, 98, and 100, which pass high frequency signals responsive to the outputs of the comparators. These gates are electronic switches and function to gate the high frequency signal (e.g., 10 KHz) from oscillator 102 through the primary windings of transformers 104, 106, and 108 to the SCR's. Resistor 110 and diode 112 are connected in series across the primary of each transformer in order to suppress inductive voltages to a safe level consistent with the semi-conductive circuitry employed. The secondaries of transformers 104, 106, and 108 are connected in series with diode 114 between the gate and cathode of SCR devices 12, 14, and 16. The turn on periods for the SCR's follow the periods of the pulse outputs of the comparators (as shown in waveforms d-i). The waveforms g-i, which are produced by control signal $S_2$, are illustrative of the turn on periods for a moderately to heavily loaded motor in contrast to waveforms d-f, which are indicative of a slightly loaded or unloaded motor.

Fig. 5 illustrates a modified form of the invention wherein instead of SCR's, bi-directional Triacs 210, 211, and 212 are employed. Like components to those of Fig. 1 have like numerical designations. A resistor 213 and capacitor 214 are conventionally connected in series across the power terminals of each of the Triacs in order to stabilize their operation. Since the Triacs are controllable during both half cycles of input power, it is necessary to provide a full wave control, and thus ramp generators 116, 118, and 120 are indicated as being 120 Hz devices. Likewise, phase detectors 122, 124, and 126 are full wave devices, and each is as shown in Fig. 6.

Referring to Fig. 6, each phase detector includes two oppositely phased voltage squaring circuits 128 and 130 and two oppositely phased current squaring circuits 132 and 134. The outputs of voltage squaring circuit 128 and current squaring circuit 132 are summed through resistors 136 and 138 and the sum rectified by diode 140. Similarly, the outputs of voltage squaring circuit 130 and current squaring circuit 134 are summed through a like pair of resistors 136 and 138 and rectified by a diode 140. Finally, the rectified outputs of the squaring circuits appear on the common terminal 142, to which all phase detector outputs are connected as shown in Fig. 5. These outputs, there being two for each half cycle of input to each phase, appear in Fig. 7, showing that in a time period of one cycle of 60 cycle current, a period of 0.016 seconds, 6 output pulses occur. Thus, twice as many output pulses are provided as with the circuit of Fig. 1. By virtue of this higher frequency output, a frequency of 360 Hz compared to 180 Hz for the circuit of Fig. 1, the time constant characteristic of signal conditioning or integrating circuit 150 differs from signal conditioner 66 of the circuit of Fig. 1. Signal conditioner 150 includes three inverse feedback circuits between the output and input of operational amplifier 151, one consisting of capacitor 152, one consisting of capacitor 154 in series with resistor 156, and one consisting of resistors 158 and 160 and an intermediate capacitor 162 connected to ground. Capacitor 152 typically has a value of .15 MFD, or from .12 to .18 MFD. Capacitor 154 typically has a value of 20 MFD, or from 18 to 22 MFD. Resistor 156 typically has a value of 12,000 ohms, or in the range of from 10K to 50K ohms. Resistors 158 and 160 typically have like values of 18,000 ohms, or in the range of from 16K to 20K ohms, and capacitor 162 typically has a value of 3 MFD, or in the range of from 2 to 4 MFD. In operation, capacitor 152 provides a low pass filter to smooth the square wave feedback control signal. Capacitors 162 and 154 and resistors 156, 158, and 160 provide a lead-lag-lead network required for stabilizing the closed loop control signal.

The output of operational amplifier 151 is fed to comparators 90, 92, and 94 which function just as their counterparts in Fig. 1, except that the rate of comparison performed by each is at a 120 Hz rate. The outputs of the comparators control gates 96, 98, and 120 to apply high frequency triggering signals to Triacs 210, 211, and 212 during a portion of each half cycle (rather than only once each cycle as in Fig. 1) as determined by the load on motor 10 to effect power factor control as described above.

A further difference between the systems of Figs. 1 and 5 is the order of the voltage signal input connections. Thus, in Fig. 5, the voltage input to phase detector 122 is obtained from the A-B phase, the B-C phase input voltage is applied to phase detector 124, and the C-A phase voltage input is applied to phase detector 126. Further, the voltage input to each of the phase detectors and ramp generators of Fig. 5 is shifted by an RC circuit consisting of resistors 130, 132, and capacitor 134, which effects about a 40° lag in current with respect to voltage. It is found that a 40° phase lag produces the optimum delay of the trigger pulses required for turning on the Triacs.

Both of the embodiments of this invention illustrated herein provide a smooth current input control to motor 10 and accomplish a power factor type regulation of input power as a function of loading and/or line voltage fluctuations without significant motor instability.

## Claims

1. A power factor control system for a three phase A.C. induction motor having no common reference terminal through which all of the phase currents flow, and operable by sampling phase current and voltage, characterised by:

first, second, and third phase detection circuits for sampling the current and voltage in each of said three phases and providing discrete outputs each of which varies in accordance with the difference in phase between said current and said voltage;
means for developing a power factor command signal;
summing and difference circuitry for combining the three outputs of said detection circuits to derive therefrom an averaged signal and for subtracting said command signal from said averaged signal;
integration circuitry responsive to said subtraction signal for providing a control signal; and
control circuitry including a plurality of discrete signal responsive switches individually connected in series with each phase input of said motor, each switch being responsive to said control signal for varying the "on" time of the switch during each cycle of input power to an associated motor phase as a direct function of load on said motor and/or input voltage fluctuations, whereby an increase in the difference between the magnitude of said voltage and the magnitude of load applied to said motor is compensated for by a reduction in power to said motor, thereby generally improving its efficiency,

2. A power factor control system as set forth in claim 1 wherein:

each switch comprises an SCR, and there is an oppositely polarized rectifier connected across each SCR;
each phase detection circuit samples one-half cycle of electrical current and voltage; and
said integration circuitry includes circuitry for effecting, with an increase in frequency, a lag function, then a diminished lag function, and finally an increased lag function, whereby the stability of motor operation is enhanced.

3. A power factor control system as set forth in claim 2 wherein:

said control circuitry includes a half wave signal ramp generator and a comparator for each phase;
each comparator includes circuitry responsive to said control signal and a signal from one of said ramp generators for providing a gating signal having a width which varies inversely as a function of the amplitude of said control signal; and
a high frequency signal and gating circuit responsive to said gating signals from said comparators for individually applying said high frequency signal as a "turn on" signal to said SCR's.

4. A power factor control system as set forth in claim 1 wherein:

each switch comprises a Triac;
each phase detection circuit samples both half cycles of alternating current input to an associated phase; and
said integration circuitry includes circuitry for effecting, with an increase in frequency, a lag function, then a diminished lag function, and finally an increased lag function, whereby the stability of motor operation is enhanced.

5. A power factor control system as set forth in claim 4 wherein:

said control circuitry includes a full wave signal ramp generator and a comparator for each phase;
each comparator includes circuitry responsive to said control signal and a signal from one of said ramp generators for providing a gating signal having a width which varies as an inverse function of said control signal; and
a high frequency signal and gating circuit responsive to said gating signals from said comparators for individually applying said high frequency signal as a "turn on" signal to said Triacs.

## Patentansprüche

1. Leistungsfaktorsteuersystem für einen Drei-Phasen-Wechselstrominduktionsmotor ohne gemeinsamen Referenzanschluß, durch welchen alle drei Phasenströme fließen und der durch Abtasten des Phasenstromes und der Spannung betätigbar ist, gekennzeichnet durch:

erste, zweite und dritte Phasendetektorschaltungen zum Abtasten des Stromes und der Spannung in jedem der drei Phasen und zur Bildung diskreter Ausgangswerte von denen jeder sich in Abhängigkeit von der Differenz in der Phase zwischen Strom und Spannung ändert;

eine Einrichtung zur Bildung eines Leistungsfaktorbefehlssignals;

eine Summen- und Differenzschaltung zur Verbindung der drei Ausgänge der Detektorschaltungen zur Herleitung eines Durchschnittssignales und zum Subtrahieren des Befehlssignals von dem Durchschnittssignal;

eine Integrationsschaltung, die auf das Subtraktionssignal anspricht, um ein Steuersignal zu schaffen, und eine Steuerschaltung mit einer Vielzahl von diskreten auf Signale ansprechenden Schalter, die individuell mit jedem Phaseneingang des Motors in Reihe geschaltet sind, wobei jeder Schalter auf das Steuersignal anspricht, um die "Ein"-Zeit des Schalters während jedes Zyklus der Eingangsleistung für eine verbundene Motorphase als eine direkte Funktion der Last für den Motor und/oder die Eingangsspannungsschwankungen zu ändern, wobei ein Ansteigen der Differenz zwischen der Größe dieser Spannung und der Größe der an den Motor angelegten Last durch Reduzierung der Leistung für den Motor kompensiert wird, wodurch sein Wirkungsgrad allgemein verbessert wird.

2. Leistungsfaktorsteuersystem nach Anspruch 1, dadurch gekennzeichnet, daß jeder Schalter einen SCR aufweist und daß ein entgegengesetzt polarisierter Gleichrichter parallel zu jedem SCR geschaltet ist, daß jede Phasendetektorschaltung einen Halbzyklus des elektrischen Stromes und der Spannung abtastet und daß die Integrationsschaltung eine Schaltung aufweist, die beim Ansteigen der Frequenz eine Phasennacheilfunktion, dann eine verminderte Phasennacheilfunktion und schließlich eine verstärkte Phasennacheilfunktion hervorruft, wobei die Stabilität des Motorbetriebes verbessert wird.

3. Leistungsfaktorsteuersystem nach Anspruch 2, dadurch gekennzeichnet, daß die Steuerschaltung für jede Phase einen Halbwellensignal-Rampengenerator und einen Komparator aufweist, daß jeder Komparator eine Schaltung enthält, die auf das Steuersignal sowie auf ein Signal von einem der Rampengeneratoren anspricht, um ein Torsignal zu erzeugen mit einer Breite, die sich als Funktion der Amplitude des Steuersignales invers ändert und daß ein Hochfrequenzsignal sowie eine Torschaltung vorgesehen sind, die auf die Torsignale der Komparatoren anspricht, um das Hochfrequenzsignal als "Einschalt"-Signal an die SCR's anzuschalten.

4. Leistungsfaktorsteuersystem nach Anspruch 1, dadurch gekennzeichnet, daß jeder Schalter einen Triac aufweist, daß jede Phasendetektorschaltung beide Zyklushälften des Wechselstromes einer entsprechenden Eingangsphase abtastet und daß die Integrationsschaltung eine Schaltung aufweist, durch die mit dem Ansteigen der Frequenz eine Phasennacheilfunktion, danach eine verminderte Phasennacheilfunktion und schließlich eine verstärkte Phasennacheilfunktion wirksam wird, wobei die Stabilität des Motorbetriebes verbessert wird.

5. Leistungssteuersystem nach Anspruch 4, dadurch gekennzeichnet, daß die Steuerschaltung für jede Phase einen Vollwellensignal-Rampengenerator und einen Komparator aufweist, daß jeder Komparator eine Schaltung enthält, die auf das Steuersignal sowie auf ein Signal von einem der Rampengeneratoren anspricht, um ein Torsignal zu erzeugen mit einer Breite, die sich als inverse Funktion in bezug auf das Steuersignal ändert und daß ein Hochfrequenzsignal und Torschaltung vorhanden sind, die auf die Torsignale der Komparatoren ansprechen, um das Hochfrequenzsignal als ein "Einschalt"-Signal an die Triacs individuell anzuschalten.

**Revendications**

1. Système de commande de facteur de puissance, par échantillonnage en courant et tension par phase, pour moteur alternatif triphasé à induction dans lequel il n'y a pas de borne commune empruntée par les courants de toutes les phases, caractérisé en ce qu'il comporte:

— un premier, un second et un troisième circuits de détection pour échantillonner en courant et tension chacune des phases et pour fournir des signaux de sortie discrets variant avec le déphasage entre courant et tension par phase;

— des moyens pour engendrer un signal de commande de facteur de puissance;

— un circuit de somme et différence pour combiner les signaux de sortie des trois circuits de détection, pour en déduire un signal de valeur moyenne et pour soustraire le signal de commande du signal de valeur moyenne;

— un circuit d'intégration fournissant un signal de régulation à partir du signal obtenu par soustraction;

— un circuit de commande comprenant une pluralité d'organes de commutation sensibles à des signaux discrets et connectés en série avec chaque borne d'entrée de phase du moteur, chaque organe de commutation étant contrôlé en temps de conduction par le signal de régulation, durant chaque période d'alimentation en énergie pour une phase correspondante du moteur, en fonction directe de la charge et/ou des fluctuations de tension d'entrée, de telle sorte qu'une augmentation de la différence entre la grandeur de la tension et celle de la charge, appliquée au moteur soit compensée par une réduction de la puissance de ce moteur, augmentant ainsi son rendement.

2. Système de commande de facteur de puissance selon la revendication 1, caractérisée en ce que:

— chaque organe de commutation comporte un thyristor et en parallèle une diode polarisée en inverse;
— chaque circuit de détection échantillonne une demi-période en courant et tension;
— le circuit d'intégration comporte un agencement apte à réaliser une fonction de déphasage en association avec une augmentation en fréquence, puis une fonction de déphasage réduit et enfin une fonction de déphasage accru, de manière à améliorer la stabilité opérationnelle du moteur.

3. Système de commande de facteur de puissance selon la revendication 2, caractérisé en ce que

— le circuit de commande comporte un générateur de rampe demi-période et un comparateur pour chaque phase,
— chaque comparateur comporte un circuit qui est sensible au signal de régulation et au signal d'un générateur de rampe et qui fournit un signal d'actionnement dont la largeur varie en sens inverse de l'amplitude du signal de contrôle;
— un circuit de signal haute fréquence et d'actionnement qui est sensible aux signaux d'actionnement des comparateurs et qui applique individuellement un signal haute fréquence de mise en conduction aux thyristors.

4. Système de commande de facteur de puissance selon la revendication 1, caractérisé en ce que:

— chaque organe de commutation comporte un triac;
— chaque circuit de détection échantillonne les deux demi-périodes du signal d'entrée, en courant alternatif, de la phase associée;
— le circuit d'intégration comporte un agencement apte à réaliser une fonction de déphasage en association avec une augmentation en fréquence, puis une fonction de déphasage réduit et enfin une fonction de déphasage accru de manière à améliorer la stabilité opérationnelle du moteur.

5. Système de commande de facteur de puissance selon la revendication 4, caractérisé en ce que:

— le circuit de commande comporte un générateur de rampe prenant en compte la période et un comparateur pour chaque phase;
— chaque comparateur comporte un circuit qui est sensible au signal de contrôle et à un signal de l'un des générateurs de rampe et qui fournit un signal d'actionnement dont la largeur varie en fonction inverse du signal de contrôle;
— un circuit de signal haute fréquence et d'actionnement qui est sensible aux signaux d'actionnement des comparateurs et qui applique individuellement un signal haute fréquence de mise en conduction aux triacs.

FIG I

**0 051 903**

FIG. 4

FIG. 6

FIG. 2

FIG 3

FIG 7

FIG 5